# EUROPEAN PATENT SPECIFICATION

(11) **EP 2 764 042 B1**
(45) Date of publication and mention of the grant of the patent: **16.08.2023**
(21) Application number: 12780310.4
(22) Date of filing: 04.10.2012
(51) Int. Cl.: C08K 3/00, E21B 43/10, E21B 33/12, C08L 23/16, C08L 9/06, C08L 21/00, C08L 23/28, C08K 3/01

(54) **SWELLABLE ELASTOMERIC POLYMER MATERIALS**
ELASTOMERE QUELLBARE POLYMERMATERIALIEN
MATÉRIAUX POLYMÈRES ÉLASTOMÈRES GONFLABLES

(30) Priority: 04.10.2011 NL 2007533
(43) Date of publication of application: 13.08.2014
(73) Proprietor: Ruma Products B.V., 7903 BM Hoogeveen (NL)
(72) Inventor: SEYGER, Roger Martin, 7903 BM Hoogeveen (NL)
(74) Representative: V.O.
(86) International application number: PCT/NL2012/050695
(87) International publication number: WO 2013/051937

(56) References cited:
- US-A1- 2009 120 640
- US-A1- 2009 205 841

## Description

The invention is directed to elastomeric polymer materials having controllable swellable properties and to the use of such materials.

Elastomeric materials, such as rubbers are used in many industries *inter alia* in energy winning, such as geo-thermal energy winning and oil and gas production, for instance for sealing off spaces in various places in wellbores in an earth formation. A specific class of these materials are water-swellable elastomers.

WO-A-2005/012686 for instance describes a composition for sealing a space in a wellbore formed in an earth formation, the earth formation containing formation water susceptible of flowing into the wellbore. The rubber compositions described in this document are water-swellable, which means that upon contact with water the rubber compositions may swell, for instance upon contact with water coming from areas surrounding the wellbore.

Although these known compositions are useful in sealing off underground formation areas upon contact with water, the present inventors realized that in the practical application of these materials there can be serious obstacles. In particular it is considered disadvantageous that the prior art rubber compositions start to swell immediately upon contact with any water. The production of wellbores typically requires the control of a drill bit at very great depths, several kilometers not being uncommon. Swellable elastomers are applied commonly in this wellbore production process to create a seal between the various casings, and the fluids contained within the rock formations being penetrated, that are used to contain and convey the drill string and thus form the drill hole. Also swellable elastomers are used in seals that are used as spacers to position and seal an inner pipe in a concentric outer pipe. By using swellable elastomers here fluids can be contained in a certain segment. Also swellable elastomers are used in production enhancement process for example fracturing, the process of initiating and subsequently propagating a fracture in a rock formation, employing the pressure of a fluid as the source of energy. This may be done by pumping water and particles into the fracture, using swellable elastomers as the sealing source against these motive pressures.

In most applications the swellable elastomers must be applied and function at great depths. It becomes very difficult to ensure that the swellable compositions do not contact activating fluids prematurely, *viz.* before they are put in their proper place. In this respect it is important to realize that the elastomer swelling curve of swelling ratio versus time is steep in the beginning and tends to tail off and flatten after some time, thus the rate of swelling upon contact with the activating fluid is fastest for initial un-swollen elastomers. These factors make utilization of the swelling behavior complicated and, in the events of delays in getting the swelling elastomer into the required place, very difficult to control.

It is an object of the invention to provide rubber compositions, such as seals as well as other rubber products, such as swelling packers, casings and tubing seals and similar, that allow for control of their swelling behavior, so that they can be employed more successfully in the above-mentioned applications, as well as in all other applications where swelling is required or used. The present inventors found that this object may be accomplished by using a precursor in the swellable elastomer, which precursor may be converted into a fluid-soluble compound.

The invention is defined in independent claims 1 and 8 - 10. Thus, in a first aspect, the present invention is directed to a composition comprising an elastomer matrix having mixed therein a precursor for a swellable compound, which precursor is not, or only slightly soluble in fluid and which may be converted into a fluid-soluble compound. Conversion of the precursor into a fluid-soluble compound renders the entire composition fluid-swellable.

US-A-2009/0120640 describes "auto-sealing" cement compositions and the use thereof in subterranean cementing. The swelling cement, which can be encapsulated is present in a separate layer. Degradation upon contact with an acid is not disclosed or suggested.

US-A-2009/205841 is similar to US-A-2009/0120640. It discloses a swellable elastomer that is protected by a layer that may be removed by an acid. In accordance with the present invention the precursor is mixed in the elastomer matrix, rather than be present as a separate phase (e.g. layer) thereon. This provides for a different and much more versatile product that can be applied relatively simple. It is surprising that the precursor can be converted into a fluid soluble compound despite the fact that it is present inside (*viz.* compounded or mixed in) the elastomer matrix.

The precursor is a compound that does not result in swelling of the elastomer prior to its activation. However, in accordance with the invention the precursor may be converted, for instance by contacting it with a triggering fluid solution. The converted triggered precursor is typically soluble in water or oil and this results in the initiation of the desired swelling of the elastomer when it is subsequently or concurrently contacted with fluid.

The fluid that according to the invention is intended to induce swelling of the activated elastomeric composition is typically fluid that is found in earth formations (formation fluid) or that is used in the drilling or completion and/or stimulation fluid to contain formation fluid. This fluid may be pure, but generally it contains dissolved salts or hydrocarbons, usually in various concentrations, up to a saturated solution. The fluid may be water, e.g. formation water. Generally the swellable composition of the invention should be capable of swelling in water of salinity as high as 140 g/dm³ sodium chloride and containing considerable concentrations of bivalent ions, such as at least 40 g/dm³ calcium chloride and 8 g/dm³ magnesium chloride. The transition from non-swollen to fully swollen state preferably takes place within a timeframe of a few hours up to a few months, for instance 2-3 weeks, depending upon the requirements and the swollen state should be maintained for an extended period to suit the requirements of the wellbore, for instance at least one year.

In accordance with the invention, migration of the precursor and/or the soluble compound (*i.e.* the precursor after activation) are prevented by the matrix of the elastomer, whereas fluid may migrate into the matrix by a process that is similar to diffusion or osmosis. As a result the matrix swells. Preferably the precursor is incorporated in a plurality of particles homogeneously distributed through the matrix material.

Formation fluid, such as formation water may have a low temperature, such as 4-5 °C or more, but it can also be much hotter, e.g. up to 300 °C or more.

The precursor is preferably a chemical having a low fluid-solubility that can be converted into a chemical having a higher fluid-solubility. Low fluid-solubility in this respect means a solubility at room temperature of less than 10⁻⁴ M, more preferably less than 0.5·10⁻⁴ M. In order to obtain sufficient swelling, the converted chemical precursor preferably has a solubility at room temperature of 10⁻¹ M or more at room temperature, more preferably more than 2·10⁻¹ M.

Preferably the precursor is a salt. Salt precursors may be converted conveniently with acidic or basic solutions into water-soluble salts. Very suitable combinations are phosphates (such as Ca₃(PO₄)₂), oxides, hydroxides, sulfates, sulfides, sulfites, carbonates, halogenides, *etc.* that can be converted into water soluble salt by contacting it with an acidic solution. Suitable acids are strong acids, such as hydrochloric acid, nitric acid, hydrogen fluoride, hydrogen bromide, hydrogen iodide, sulfuric acid, *etc.* or weak acids, such as acetic acid, citric acid, formic acid, *etc.*

Apart from phosphates, other suitable salt precursors are for instance BaCO₃, MgO, ZnS, Fe(OH)₃, BaSO₄, *etc.*

Suitable elastomers are rubber materials whichswell in hydrocarbons present in oil and gas wells, such as ethylene propylene rubber (EPM and EPDM); ethylene- propylene-diene terpolymer rubber (EPT); butyl rubber (IIR); brominated butyl rubber (BIIR); chlorinated butyl rubber (CIIR); styrene butadiene copolymer rubber (SBRand silicone rubbers (VMQ); and combinations thereof.

Also suitable are rubber materials which do not swell in crude oil, such as butadiene acrylonitrile copolymer (nitrile rubber, NBR); hydrogenated NBR (HNBR), such as ZETPOL^{™}, THERBAN^{™}; NBR with reactive groups (X-NBR); chlorinated polyethylene (CM/CPE); neoprene rubber (CR); epichlorohydrin ethylene oxide copolymer (CO, ECO); sulphonated polyethylene (CSM); ethylene acrylate rubber (EAM/AEM); fluorsilicone rubber (FVMQ); perfluoro rubbers (FFKM) such as KALREZ^{™}, CHEMRAZ^{™}; fluoro rubbers (FKM), such as VITON^{™}, FLUOREL^{™}; and tetrafluorethylene/propylene (TFE/P), such as AFLAS^{™} and combinations thereof.

Most of these elastomers can be crosslinked by more than one crosslinking agent (*e.g.* either sulphur crosslinked or peroxide crosslinked).

Apart from the thermoset (non swelling and oil swelling) elastomer matrix materials quoted above, also blends of elastomers can be applied (so called "elastomeric alloys"). Although an almost inexhaustible combination of thermoplastic and thermoset elastomers are feasible, the most preferred are the EPDM/polypropylene blends such as SARLINK^{™}, Levaflex^{™}, Santoprene^{™}, NBR-polypropylene blends such as GEOLAST^{™}, NBR/polyvinylchloride blends and NR/polypropylene blends. All of these have a tendency to swell in petroleum crudes, especially at the targeted downhole well temperatures.

In addition to the precursor that may be converted into a fluid-swelling inducing compound, the compositions of the present invention may further comprise other ingredients, in particular plasticizers, such as polyester plasticizers; additives to increase the mechanical properties, such as carbon blacks; crosslinkers, such as sulfur or peroxide type crosslinkers; crosslinking promotors, such as triallyl isocyanurate.

The compositions of the invention are preferably free of direct swelling additives (*i.e.* compounds that do not require activation), since this would result in immediate swelling upon contact with water. Thus the composition is preferably essentially free of super poly-electrolytes such as super absorbing polymers (SAPs), such as sodium polyacrylate and acrylic acids; hydrophilic clays such as sodium bentonite particles (*e.g.* Wyoming Bentonite); and natural water swelling material such as wood, cork or cellulose fillers. In practice, "essentially free" means usually that such compounds are present in concentration much less then 1 wt.%, preferably less than 0.1 wt.%.

A process according to the present invention comprises bringing the composition to a desired location and converting said precursor into a fluid-soluble compound, while allowing said composition to be in contact with fluid, prior to, during and/or after said converting of said precursor. As long as the precursor has not been converted in accordance with the invention, contact with fluid will not result in substantial swelling of the elastomer.

The compositions of the invention can be formed into products of different shapes and dimensions. Non-limiting examples of products made from the compositions of the invention are small particles, for instance spherical particles, *e.g.* having an average diameter of from 0.1 to 10 mm; the packers, spacers and seals mentioned above; and other elastomer products commonly used in the field of oil and gas recovery, as well as geothermal energy applications. Apart from application in oil and gas production, and applications which involve the storage and/or winning of geothermic heat, the compositions of the invention and the products made therefrom can be used in completely different application fields, such as in preparing medical devices, such as catheters.

### Example

A rubber composition was prepared using the following ingredients:
100 g EPDM rubber,
25 g paraffinic plasticizer,
37.5 g FEF carbon black,
1.56 g peroxide crosslinker,
1.25 g triallyl isocyanurate (coagent for crosslinking), and
181.25 g Ca₃(PO₄)₂.

The ingredients were compounded using a 2 roll mill. The compounded rubber was vulcanized at 160 °C during 1 hour. Test pieces were cut and submerged in two different testing liquids. The first liquid comprised demi-water, see Table 1. The second liquid was an aqueous 20 wt.% HCl solution, see Table 2. Changes in hardness, weight and volume were monitored over time. The following results were obtained.

**Table 1. Test pieces submerged in water**

| Time (days) | Hardness (°ShA) | Weight (g) | Weight change (%) | Volume (cm³) | Volume change (%) |
|---|---|---|---|---|---|
| 0 | 72 | 7.98 | 0 | 5.27 | 0 |
| 3 | 65 | 8.39 | 5.137844612 | 5.69 | 7.969639469 |
| 7 | 61 | 8.46 | 6.015037594 | 5.7 | 8.159392789 |
| 17 | 61 | 8.4 | 5.263157895 | 5.71 | 8.34914611 |

**Table 2. Test pieces submerged in 20 wt.% HCl solution**

| Time (days) | Hardness (°ShA) | Weight (g) | Weight change (%) | Volume (cm³) | Volume change (%) |
|---|---|---|---|---|---|
| 0 | 73 | 7.98 | 0 | 5.28 | 0 |
| 7 | 32 | 19 | 138.10 | 15.28 | 189.39 |
| 14 | 24 | 23.84 | 198.75 | 19.81 | 275.19 |
| 19 | 25 | 27.33 | 242.48 | 23.51 | 345.27 |
| 21 | 26 | 28.12 | 252.38 | 23.90 | 352.65 |

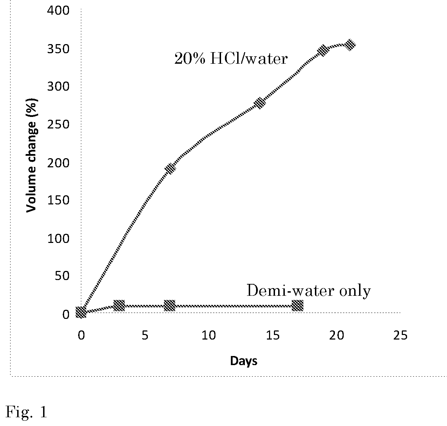

Figure 1 shows the swelling behavior (volume change) at 80 °C as a function of time for the samples submerged in demi-water and 20 wt.% HCl.

The results clearly demonstrate that the rubber compositions according to the invention swell only when contacted with an acid.

## Claims

1. Elastomer composition comprising an elastomer matrix and mixed therein a precursor for a fluid-soluble compound, which precursor has limited solubility in a fluid of 10⁻⁴ M or less and which may be converted into a compound that is soluble in said fluid, such that said conversion of the precursor into the fluid-soluble compound renders the composition fluid-swellable.

2. Composition according to the previous claim, wherein said precursor is a salt having a low water-solubility that can be converted into a salt having a higher water-solubility.

3. Composition according to any of the previous claims, wherein said precursor may be converted by contacting with an acidic or a basic solution.

4. Composition according to any of the previous claims, wherein said precursor is selected from the group consisting of Ca₃(PO₄)₂, BaCO₃, MgO, ZnS, Fe(OH)₃, BaSO₄, and combinations thereof.

5. Composition according to any of the previous claims, wherein said elastomer matrix comprises an elastomer selected from the group consisting of: rubber materials which, apart from swelling in water, also swell in crude oil; rubber materials which do not swell in crude oil; and combinations thereof.

6. Composition according to the previous claim, wherein said rubber material which swells in crude oil, is selected from ethylene propylene rubber (EPM and EPDM); ethylene- propylene-diene terpolymer rubber (EPT); butyl rubber (IIR); brominated butyl rubber (BIIR); chlorinated butyl rubber (CIIR); styrene butadiene copolymer rubber (SBR); and silicone rubbers (VMQ) and combinations thereof; and wherein said rubber material which does not swell in crude oil, is selected from the group consisting of butadiene acrylonitrile copolymer (nitrile rubber, NBR); hydrogenated NBR (HNBR), such as ZETPOL^{™}TERBAN^{™}; NBR with reactive groups (X-NBR); chlorinated polyethylene (CM/CPE); neoprene rubber (CR); epichlorohydrin ethylene oxide copolymer (CO, ECO); sulphonated polyethylene (CSM); ethylene acrylate rubber (EAM/AEM); fluorsilicone rubber (FVMQ), perfluoro rubbers (FFKM) such as KALREZ^{™}, CHEMRAZ^{™}; fluoro rubbers (FKM), such as VITON^{™}, FLUOREL^{™}; tetrafluorethylene/propylene (TFE/P), such as AFLAS^{™}; and combinations thereof.

7. Composition according to any of the previous claims, wherein said fluid is water and wherein said precursor can be converted into a compound that is soluble in water.

8. Product comprising a composition according to any of the previous claims, which product is in the form of a packer, spacer, or seal.

9. Process for applying a composition according to any of the previous claims, which process comprises bringing the composition to a desired location and converting said precursor into a fluid-soluble compound, while allowing said composition to be in contact with said fluid, prior to, during and/or after said converting of said precursor.

10. Use of an elastomer composition according to any one of claims 1-7 and/or a product according to claim 8 in a wellbore.

## Patentansprüche

1. Elastomerzusammensetzung, umfassend eine Elastomermatrix und darin gemischt einen Vorläufer für eine flüssigkeitslösliche Verbindung, wobei der Vorläufer eine begrenzte Löslichkeit in einer Flüssigkeit von 10⁻⁴ M oder weniger hat und der in eine Verbindung umgewandelt werden kann, die in der Flüssigkeit löslich ist, so dass die Umwandlung des Vorläufers in die flüssigkeitslösliche Verbindung die Zusammensetzung flüssigkeitsquellbar macht.

2. Zusammensetzung nach dem vorhergehenden Anspruch, wobei der Vorläufer ein Salz mit einer geringen Wasserlöslichkeit ist, das in ein Salz mit einer höheren Wasserlöslichkeit umgewandelt werden kann.

3. Zusammensetzung nach einem der vorhergehenden Ansprüche, wobei der Vorläufer durch Kontakt mit einer sauren oder basischen Lösung umgewandelt werden kann.

4. Zusammensetzung nach einem der vorhergehenden Ansprüche, wobei der Vorläufer ausgewählt ist aus der Gruppe bestehend aus Ca₃(PO₄)₂, BaCO₃, MgO, ZnS, Fe(OH)₃, BaSO₄ und Kombinationen davon.

5. Zusammensetzung nach einem der vorhergehenden Ansprüche, wobei die Elastomermatrix ein Elastomer umfasst, ausgewählt aus der Gruppe bestehend aus:
Kautschukmaterialien, die neben der Quellung in Wasser auch in Rohöl quellen; Kautschukmaterialien, die in Rohöl nicht quellen; und Kombinationen davon.

6. Zusammensetzung nach dem vorhergehenden Anspruch, wobei das Kautschukmaterial, das in Rohöl quillt, ausgewählt ist aus Ethylen-Propylen-Kautschuk (EPM und EPDM); Ethylen-Propylen-Dien-Terpolymer-Kautschuk (EPT); Butylkautschuk (IIR); bromiertem Butylkautschuk (BIIR); chloriertem Butylkautschuk (CIIR); Styrol-Butadien-Copolymer-Kautschuk (SBR); und Silikonkautschuken (VMQ) und Kombinationen davon; und wobei das Kautschukmaterial, das in Rohöl nicht quillt, ausgewählt ist aus der Gruppe bestehend aus Butadien-Acrylnitril-Copolymer (Nitrilkautschuk, NBR); hydriertem NBR (HNBR), wie ZETPOL^{™}TERBAN^{™}; NBR mit reaktiven Gruppen (X-NBR); chloriertem Polyethylen (CM/CPE); Neoprenkautschuk (CR); Epichlorhydrin-Ethylenoxid-Copolymer (CO, ECO); sulfoniertem Polyethylen (CSM); Ethylen-Acrylat-Kautschuk (EAM/AEM); Fluorsilikonkautschuk (FVMQ), Perfluorkautschuke (FFKM), wie KALREZ^{™}, CHEMRAZ^{™}; Fluorkautschuke (FKM), wie VITON^{™}, FLUOREL^{™}; Tetrafluorethylen/Propylen (TFE/P), wie AFLAS^{™}; und Kombinationen davon.

7. Zusammensetzung nach einem der vorhergehenden Ansprüche, wobei die Flüssigkeit Wasser ist und wobei der Vorläufer in eine in Wasser lösliche Verbindung umgewandelt werden kann.

8. Produkt, das eine Zusammensetzung nach einem der vorhergehenden Ansprüche umfasst, wobei das Produkt in Form eines Packers, Abstandshalters, oder einer Dichtung ist.

9. Verfahren zum Auftragen einer Zusammensetzung nach einem der vorhergehenden Ansprüche, wobei das Verfahren Bringen der Zusammensetzung an einen gewünschten Ort und Umwandeln des Vorläufers in eine flüssigkeitslösliche Verbindung umfasst, während man die Zusammensetzung vor, während und/oder nach der Umwandlung des Vorläufers mit der Flüssigkeit in Kontakt sein lässt.

10. Verwendung einer Elastomerzusammensetzung nach einem der Ansprüche 1 - 7 und/oder eines Produkts nach Anspruch 8 in einem Bohrloch.

## Revendications

1. Composition élastomère comprenant une matrice élastomère et mélangé dans celle-ci un précurseur d'un composé soluble dans un fluide, lequel précurseur a une solubilité limitée dans un fluide de 10⁻⁴ M ou moins et qui peut être converti en un composé qui est soluble dans ledit fluide, de sorte que ladite conversion du précurseur en le composé soluble dans les fluides rend la composition gonflable dans les fluides.

2. Composition selon la revendication précédente, dans laquelle ledit précurseur est un sel ayant une faible solubilité dans l'eau qui peut être transformé en un sel ayant une solubilité dans l'eau plus élevée.

3. Composition selon l'une quelconque des revendications précédentes, dans laquelle ledit précurseur peut être transformé par mise en contact avec une solution acide ou basique.

4. Composition selon l'une quelconque des revendications précédentes, dans laquelle ledit précurseur est choisi dans le groupe consistant en Ca₃(PO₄)₂, BaCO₃, MgO, ZnS, Fe(OH)₃, BaSO₄ et leurs combinaisons.

5. Composition selon l'une quelconque des revendications précédentes, dans laquelle ladite matrice élastomère comprend un élastomère choisi dans le groupe constitué par : les matériaux en caoutchouc qui, en plus de gonfler dans l'eau, gonflent également dans le pétrole brut; les matériaux en caoutchouc qui ne gonflent pas dans le pétrole brut; et leurs combinaisons.

6. Composition selon la revendication précédente, dans laquelle ledit matériau en caoutchouc qui gonfle dans le pétrole brut, est choisi parmi le caoutchouc éthylène propylène (EPM et EPDM); le caoutchouc terpolymère éthylène-propylène-diène (EPT); le caoutchouc butyle (IIR); le caoutchouc butyle bromé (BIIR); le caoutchouc butyle chloré (CIIR); le caoutchouc de copolymère styrène-butadiène (SBR); et les caoutchoucs de silicone (VMQ) et leurs combinaisons; et dans laquelle ledit matériau en caoutchouc qui ne gonfle pas dans le pétrole brut, est choisi dans le groupe constitué par le copolymère butadiène-acrylonitrile (caoutchouc nitrile, NBR); le NBR hydrogéné (HNBR), tel que ZETPOL^{™};TERBAN^{™}; NBR avec des groupes réactifs (X-NBR); le polyéthylène chloré (CM/CPE); le caoutchouc néoprène (CR); le copolymère d'oxyde d'éthylène d'épichlorhydrine (CO, ECO); le polyéthylène sulfoné (CSM); le caoutchouc acrylate éthylène (EAM/AEM); le caoutchouc fluorosiliconé (FVMQ), les caoutchoucs perfluorés (FFKM),tels que KALREZ^{™}, CHEMRAZ^{™}; les caoutchoucs fluorés (FKM), tels que VITON^{™}, FLUOREL TM; tétrafluoréthylène/propylène (TFE/P), tels que AFLAS ^{™} ; et leurs combinaisons.

7. Composition selon l'une quelconque des revendications précédentes, dans laquelle ledit fluide est de l'eau et dans laquelle ledit précurseur peut être converti en un composé qui est soluble dans l'eau.

8. Produit comprenant une composition selon l'une quelconque des revendications précédentes, lequel produit se présente sous forme d'une garniture d'étanchéité, d'une entretoise ou d'un joint.

9. Procédé d'application d'une composition selon l'une quelconque des revendications précédentes, lequel procédé comprend l'étape consistant à amener la composition à un endroit souhaité et à convertir ledit précurseur en un composé soluble dans le fluide, tout en permettant à ladite composition d'être au contact dudit fluide, avant, pendant et/ou après ladite conversion dudit précurseur.

10. Utilisation d'une composition élastomère selon l'une quelconque des revendications 1-7 et/ou d'un produit selon la revendication 8 , dans un puits de forage.
